# EUROPÄISCHE PATENTSCHRIFT

(11) **EP 1 095 250 B1**
(45) Veröffentlichungstag und Bekanntmachung des Hinweises auf die Patenterteilung: **25.09.2002**
(21) Anmeldenummer: 99930914.9
(22) Anmeldetag: 09.07.1999
(51) Int. Cl.: G01M 3/28

(54) **DURCHFLUSSMESSVERFAHREN ZUR LECKÜBERPRÜFUNG VON LEITUNGSSYSTEMEN**
METHOD FOR DETECTING POSSIBLE LEAKS IN DUCT SYSTEMS BY FLOW METERING
PROCEDE POUR DETECTER LA PRESENCE EVENTUELLE DE FUITES DANS DES SYSTEMES DE CANALISATIONS PAR MESURE DU DEBIT

(30) Priorität: 09.07.1998 AT 45798 U
(43) Veröffentlichungstag der Anmeldung: 02.05.2001
(73) Patentinhaber: Weingartner, Heinrich, 1150 Wien (AT)
(72) Erfinder: Weingartner, Heinrich, 1150 Wien (AT)
(74) Vertreter: Babeluk, Michael, Dipl.-Ing. Mag.
(86) Internationale Anmeldenummer: AT9900176
(87) Internationale Veröffentlichungsnummer: WO00003221

(56) Entgegenhaltungen:
- EP-A- 0 188 911
- EP-A- 0 629 098
- WO-A-92/15820
- WO-A-95/02126
- DE-A- 1 922 986
- DE-A- 2 807 631
- US-A- 3 723 987
- PATENT ABSTRACTS OF JAPAN vol. 1997, no. 07, 31. Juli 1997 (1997-07-31) & JP 09 061284 A (MATSUSHITA ELECTRIC IND CO LTD), 7. März 1997 (1997-03-07)

## Beschreibung

Die vorliegende Erfindung betrifft ein Verfahren zur Überprüfung von Leitungssystemen, insbesondere von Wasserversorgungsleitungssystemen, gemäß dem Oberbegriff von Anspruch 1.

Bei der Versorgung von Verbrauchern über Leitungssysteme ist es allgemein notwendig, den jeweiligen Verbrauch zu erfassen. Dies erfordert schon die erforderliche Abrechnung der Versorgungsunternehmen mit den Verbrauchern. Es ist jedoch auch weiters erforderlich, gelegentlich zu überprüfen, ob das jeweilige System dicht ist und ob nur eine bestimmungsgemäße Nutzung desselben vorliegt. Eine missbräuchliche oder nicht bestimmungsgemäße Nutzung liegt beispielsweise im Fall von Wasserversorgungsleitungssystemen dann vor, wenn Wasserhähne nicht abgedreht sind oder wenn beispielsweise ein Aquarium mit ständiger Frischwasserzufuhr betrieben wird.

Als Verbraucher werden in der Folge alle Arten von Nutzern bezeichnet, also im Fall von Entsorgungsleitungen auch die angeschlossenen Teilnehmer, die die Entsorgungsleitung nutzen.

Durchfluss bedeutet in gegebenem Zusammenhang nicht nur die volumetrische Durchströmung einer Flüssigkeit wie etwa Wasser, sondern beispielsweise auch die Menge eines durchströmenden Gases oder den Durchsatz eines anderen strömenden Mediums.

Wasserversorgungsunternehmen schreiben bei größeren Wohnobjekten od. dgl. ihren Abnehmern im allgemeinen eine periodische Überprüfung der Wasserversorgungsleitungssysteme vor. Eine solche Überprüfung kann insbesondere bei kleineren Objekten dadurch durchgeführt werden, dass zu einem bestimmten Zeitpunkt sämtliche Verbraucher abgeschaltet werden, wobei überprüft wird, ob tatsächlich zu diesem Zeitpunkt kein Durchfluss vorliegt. Ein dennoch bestehender Durchfluss lässt auf eine Undichtheit des Systems schließen, die aufzuspüren und zu beseitigen ist. Alternativ dazu kann insbesondere bei größeren Objekten die Überprüfung auch so durchgeführt werden, dass der Wasserzähler so lange beobachtet wird, bis er zumindest kurzzeitig völlig zum Stillstand gelangt, bzw. bei Bestehen eines ständigen Mindestverbrauchs diesen erreicht. Ist dies der Fall, so kann daraus geschlossen werden, dass das System dicht ist und auch keine missbräuchliche Nutzung vorliegt. Kann jedoch ein solches Ereignis nicht beobachtet werden, so kann dies auf eine Unregelmäßigkeit hindeuten oder aber lediglich auf die Tatsache zurückzuführen sein, dass über den Beobachtungszeitraum hinweg dauernd irgendeine durchaus bestimmungsgemäße Nutzung stattgefunden hat.

In der Regel ist bei Systemen mit mehreren Verbrauchern eine Wiederholung dieses Vorganges erforderlich, dies oft auch mehrmals, je nach Anzahl und Art der Verbraucher, bis mit einiger Sicherheit feststeht, dass eine Undichtheit im System oder nichtbestimmungsgemäße Wasserentnahme vorliegt, die aufzuspüren und zu beseitigen bzw. abzustellen ist oder, dass eben feststeht, dass das System doch dicht ist und bestimmungsgemäß genutzt wird. Diese an sich schon recht zeit- und personalintensive Methode wird durch zum Teil im technischen Fortschritt und zunehmenden Wohlstand bedingte Faktoren immer aufwendiger. Erstens kommen im Zuge der technischen Entwicklung immer mehr Haushaltsgeräte zum Einsatz, die über einen längeren Zeitraum hinweg selbständig arbeiten und dabei mehrmals Wasserverbrauch verursachen, beispielsweise seien Geschirrspüler und Waschmaschinen genannt. Zweitens ist auch bei sanitär gut ausgestatteten Wohnungen (also zumindest mit Bad oder Dusche), und das sind heute schon die meisten, ein ständiger Wasserverbrauch über einige Zeit hinweg nicht ungewöhnlich, wobei hier auch die Anzahl der Bewohner von Bedeutung ist. Weiters gibt es Betriebsformen, die naturgemäß einen vergleichsweise hohen und vor allem regelmäßigen Wasserverbrauch bedingen, hier seien besonders das Gast- und Friseurgewerbe hervorgehoben, die immer schon die Anwendung der beschriebenen Methode erschwert haben. Noch verstärkt durch diese Effekte, ist es also in der Praxis äußerst schwierig, zeit- und personalintensiv, mit der beschriebenen, zur Zeit üblichen Methode die Dichtheit und die Bestimmungsgemäßheit der Nutzung eines Systems festzustellen, dies um so mehr, je mehr Verbraucher über einen Wasserzähler erfasst werden. Die Trends im Wasserverbrauchsverhalten, die derzeit zu beobachten sind, lassen erwarten, dass die derzeitige Methode in Zukunft mit noch mehr Aufwand verbunden sein wird.

Bei einem aus der DE 19 22 986 A bekannten Verfahren wird davon ausgegangen, dass ein permanenter Flüssigkeitsstrom durch eine Leitung transportiert wird. Dabei sind am Anfang und am Ende der Rohrleitung jeweils Durchflussmessstellen angeordnet, die den jeweiligen Mengenstrom erfassen. Mit einer solchen Einrichtung ist es naturgemäß möglich, eine eventuell vorhandene Leckage dadurch festzustellen, dass Unterschiede zwischen den am Anfang und am Ende der Rohrleitung ermittelten Messwerte beobachtet werden. Solche Messverfahren besitzen jedoch Nachteile, die in der Einleitung dieses Dokuments dargestellt sind. Um eine bessere und schnellere Erkennung auch von kleineren Leckagen zu ermöglichen, wird ein Verfahren beschrieben, in dem die Messwerte vom Anfang und vom Ende der Rohrleitung addiert oder subtrahiert werden, und diese Summe oder Differenz mittels eines Differenziergerätes differenziert wird, um einen Fehler erkennen zu können. Ein solches Verfahren erfordert einen hohen apparativen Aufwand. Die gleichen Nachteile weist auch ein System auf, wie es in der US 5,287,884 A beschrieben ist.

Aus der EP 0 896 212 A ist ein Absperrorgan für eine Wasserleitung bekannt, welches bei abnormal hohen Wasserdurchfluss über eine Steuerungseinheit geschlossen wird. Derartige Systeme sind vor allem zur Überwachung von einzelnen Wasserverbrauchern geeignet.

Ein weiteres einschlägiges Verfahren ist in der GB 2 251 506 A beschrieben, das den nächstkommenden Stand der Technik bildet. In dieser Druckschrift ist eine Vorrichtung offenbart, um ein etwaiges Leck in einer Kohlendioxidleitung in einer Schankanlage für Bier zu erfassen und ein entsprechendes Alarmsignal auszugeben. Bei dem Verfahren, das in dieser bekannten Vorrichtung angewendet wird, werden in regelmäßigen Zeitabständen Messwerte gewonnen, die im Wesentlichen den Durchfluss durch die Leitung anzeigen. Dabei wird davon ausgegangen, dass der Messwert im Normalfall unterhalb eines bestimmtes Grenzwertes liegen sollte, der innerhalb der Messgenauigkeit mit null gesetzt wird. Um auch ein sogenanntes katastrophales Leck zu erfassen, wird ein zweiter, höherer Grenzwert festgesetzt, der zur sofortigen Auslösung eines Alarms führt. Das Verfahren, hier beschrieben ist, arbeitet folgendermaßen: In regelmäßigen Abständen wird eine Leuchtdiode angesteuert, deren Licht von einer Fotodiode erfasst wird. Ab dem Vorliegen eines geringen Durchflusses wird der Lichtschranken unterbrochen, so dass die Fotodiode kein Signal abgeben kann. Jedes Mal dann, wenn die Leuchtdiode aktiviert wird und daher kein nennenswerter Durchfluss in der Leitung vorliegt, gibt die Leuchtdiode daher ein Signal ab, das in einem Verstärker verstärkt wird und in einem Impulsformer bearbeitet wird, um einen nachgeschalteten Timer rückzusetzen. Da in diesem Fall angenommen werden kann, dass das System vollständig im Normalzustand ist, erfolgt keine weitere Verarbeitung.

Wenn nun ein Gasdurchfluss in der überwachten Leitung vorliegt, der oberhalb des festgelegten Grenzwertes liegt, wird der Lichtschranken unterbrochen und die Fotodiode gibt kein Signal ab. Dementsprechend kann der Timer nicht mehr rückgesetzt werden. Der Durchfluss_{.} in der Leitung kann jedoch entweder auf einer Störung beruhen, die erfasst werden soll, oder auf dem normalen Vorgang des Abzapfens von Bier. Es wäre daher nicht sinnvoll, in diesem Fall sofort einen Alarm auszugeben. Um diese Unterscheidung treffen zu können, ist der Timer so eingestellt, dass die Zeit zum Ablaufen größer ist als die Zeit, die im Normalfall für das Abzapfen eines Glases Bier benötigt wird. Wenn daher die Unterbrechung des Lichtschrankens ursprünglich nur auf das Abzapfen von Bier zurückzuführen war, ist davon auszugehen, dass vor dem Ablaufen des Timers der Durchfluss wieder auf Null zurückgeht und der Lichtschranken freigegeben wird, so dass der Timer rechtzeitig wieder rückgesetzt werden kann.

Dann, wenn der Durchfluss länger andauert als der Abzapfvorgang und somit die Annahme einer Störung berechtigt ist, kann der Timer ablaufen, und nach dem Ablaufen wird ein entsprechendes Alarmsignal ausgelöst.

Das beschriebene Verfahren ist für Leitungssysteme anwendbar, bei denen bekannt ist, wie lange eine Beanspruchung des Systems üblicherweise dauert, wie dies beim Abzapfen von Bier der Fall ist. In vielen anderen Fällen können solche Angaben jedoch nicht gemacht werden, wie etwa bei der Wasserversorgung von Häusern mit einer Mehrzahl von Wohneinheiten, für die das erfinderische System primär gedacht ist. Außerdem ist die bekannte Schaltung aufwendig und fehleranfällig.

Aufgabe der vorliegenden Erfindung ist es, Verfahren zur Überprüfung von Leitungssystemen, insbesondere von Wasserversorgungsleitungssystemen auf deren Dichtheit und auf die Bestimmungsgemäßheit deren Nutzung so weiterzuentwickeln, dass diese mit großer Zuverlässigkeit und geringem Aufwand durchgeführt werden können. Außerdem sollen eine etwaige Undichtheit und eine etwaige nichtbestimmungsgemäße Nutzung eines Systems möglichst rasch erkannt werden und nicht erst anlässlich von Überprüfungen, die nach der zur Zeit üblichen Methode in der Praxis höchstens vier Mal im Jahr durchgeführt werden können. Diese Aufgaben werden durch ein Verfahren gemäß Anspruch 1 gelöst.

Der Erwartungsbereich wird in der Weise gewählt, dass bestimmt werden kann, ob ein mit Rücksicht auf Anzahl und Art der Nutzer und allfällige sonstige bedeutende Umstände als typisch zu beurteilendes Durchflussverhalten vorliegt, wobei bejahendenfalls von der Dichtheit des jeweiligen Systems und der Bestimmungsgemäßheit der Nutzung desselben ausgegangen wird.

Die erfindungsgemäße Lösung ist im Vergleich zur bekannten Lösung einfach und sie ermöglicht eine zuverlässige Anwendung auch in Fällen, in denen keine zuverlässigen Daten über die Dauer der Entnahme vorliegen. Im Gegensatz zur bekannten Lösung wird ein Beobachtungszeitraum von vorneherein festgelegt, der beispielsweise 24 Stunden beträgt. Innerhalb des Beobachtungszeitraums wird eine Vielzahl von Messwerten genommen und diese Messwerte werden gespeichert. Dies ermöglicht auch eine nachträgliche Beurteilung des Verhaltens des Systems. Eine Störungsmeldung wird dann ausgegeben, wenn innerhalb des Beobachtungszeitraums kein einziger Messwert vorliegt, der unterhalb des Grenzwertes liegt, das heißt, einen Nulldurchfluss anzeigt.

Die Erfindung kann alle Erkenntnisse, welche mit dem Durchflussverhalten von Medien durch Leitungssysteme in Verbindung stehen, flexibel anwenden. Dabei wird, im Hinblick auf Wasserversorgungsleitungssysteme, in der Praxis sicher die Erkenntnis eine Rolle spielen, die schon der oben beschriebenen, derzeit üblichen Methode zugrunde liegt, dass nämlich auch bei größeren Objekten, wie etwa einem Wohnhaus mit einer Vielzahl von Wohnungen, zu bestimmten Tageszeiten kein Wasserverbrauch erfolgt. Insbesondere in der Nacht besteht auch bei Systemen mit vielen Verbrauchern eine an Sicherheit grenzende Wahrscheinlichkeit, dass zu einem bestimmten Augenblick kein Wasser aus einem System verbraucht wird. Dies alles hängt aber, wie oben beschrieben, von mehreren Faktoren ab. Wird nun bei einer Messung des Wasserverbrauches zu einem bestimmten Zeitpunkt festgestellt, dass kein Wasserdurchfluss vorliegt, so zeigt dies, dass das System zu diesem Zeitpunkt in Ordnung ist und keine Leckage oder missbräuchliche Nutzung vorliegt. Im umgekehrten Fall ist die Aussage jedoch nicht eindeutig, da auch gewollter, bestimmungsgemäßer Wasserverbrauch vorliegen kann. Nähere Untersuchungen haben gezeigt, dass es jedoch innerhalb eines Zeitraumes von 24 Stunden üblicherweise einige Zeitpunkte gibt, zu denen tatsächlich kein beabsichtigter, bestimmungsgemäßer Wasserverbrauch erfolgt. Die Anzahl und Dauer dieser Nullverbrauchszeiträume ist natürlich multifaktoriell (siehe oben) bedingt. Wenn nun der Wasserdurchfluss ständig beobachtet oder mit ausreichender Häufigkeit festgestellt wird, beispielsweise alle 15 Minuten, so sind bei einem dichten und bestimmungsgemäß genutzten System in einem durchschnittlichen Wohnhaus während einer angenommenen Zeitspanne von 24 Stunden mit an Sicherheit grenzender Wahrscheinlichkeit mehrere Nullverbrauchszeiträume zu erwarten. Im umgekehrten Fall, wenn also während der angenommenen Zeitspanne kein Nullverbrauchszeitraum vorliegt, ist mit der gleichen Sicherheit von einer Undichtheit im System, bzw. von nichtbestimmungsgemäßer Nutzung desselben auszugehen. So wie diese Erkenntnis, können auch andere Erfahrungen nach Belieben verwertet werden. Zum Beispiel wird in manchen Wohnhäusern ein durchgehender, stärkerer Wasserverbrauch über zwei Stunden in der Nacht sicher ein Hinweis auf eine Leckage oder auf Wasserverschwendung sein, oder ein plötzlicher starker Verbrauch, oder ein jahreszeitlich ungewöhnlicher Verbrauch, oder die Kombination mehrerer Faktoren u. dgl.

Bei der Weiterverarbeitung der Messergebnisse gibt es zwei grundsätzliche Möglichkeiten. Bei der ersten Ausführungsvariante der Erfindung wird sowohl die Erfassung der Grenzwerte als auch die logische Weiterverarbeitung der Messwerte an Ort und Stelle, also bei dem überprüften System, durchgeführt. Lediglich allfällige Störungsmeldungen werden an eine entsprechende Zentrale weitergeleitet. Bei der anderen Variante der Erfindung werden nur die Messwerte an Ort und Stelle gewonnen, die gesamte Weiterverarbeitung erfolgt jedoch zentral bei einem Rechner in der entsprechenden Störungsmeldestelle. Die erste Variante besitzt den Vorteil, dass nur eine minimale Leitungskapazität zur Übertragung von Informationen zwischen Verbraucher und zentraler Meldestelle erforderlich ist. Dafür ist jedoch erforderlich, dass am Standort des Verbrauchers eine entsprechende logische Verarbeitungsschaltung vorliegt. Im umgekehrten Fall wird eine größere Leitungskapazität zum Übertragen der einzelnen Messwerte benötigt, wobei jedoch die apparative Ausstattung auf der Seite der Verbraucher minimal gehalten werden kann.

Im Falle einer Störungsmeldung ist erfindungsgemäß vorgesehen, dass die Größe der Störung ermittelt wird und ab einer vordefinierten Abweichung vom Normalzustand ein Absperrorgan stromaufwärts der Störstelle geschlossen wird. Die Absperrung des Systems erfolgt dabei automatisch, wenn ein relativ schwerwiegender Störfall festgestellt wurde.

Um den Störungsbereich sehr schnell eingrenzen zu können, ist es besonders vorteilhaft, wenn ab einer vordefinierten Abweichung vom Normalzustand vorzugsweise abwechselnd Absperrorgane in der Versorgungsleitung nachfolgenden Zweigleitungen geschlossen werden. Die Absperrorgane können auch in den Zweigleitungen nachfolgenden Unterzweigleitungen angeordnet sein. Die Absperrorgane sind über Übertragungseinrichtungen mit der Schaltung verbunden. Im Falle einer festgestellten Störung wird durch abwechselndes Absperren des Durchflusses der Störungsbereich lokalisiert und falls erforderlich abgesperrt gehalten. Störungsfreie Leitungssystemteile können weiterhin betrieben werden.

In Weiterführung der Erfindung ist weiters vorgesehen, dass zumindest das geschlossene Absperrorgan nach einer vordefinierten Zeitdauer wieder geöffnet und eine erneute Messung durchgeführt wird. Dadurch kann beispielsweise zwischen echten Gebrechen und kurzzeitigen Abweichungen vom Normalzustand durch beabsichtigten oder unbeabsichtigten höheren Durchfluss bzw. Wasserverschwendung unterschieden werden. Fehlalarme können somit weitgehend ausgeschaltet bzw. verringert werden.

Weiters betrifft die Erfindung eine Vorrichtung zur Überprüfung von Leitungssystemen, insbesondere von Wasserversorgungsleitungssystemen, mit einem Sensor, der dazu ausgebildet ist, den augenblicklichen Durchfluss zu erfassen, wobei der Sensor mit einer Schaltung verbunden ist, die die vom Sensor erfassten Daten abspeichert und anhand der gespeicherten Daten eine Beurteilung trifft, ob eine Störung vorliegt. Erfindungsgemäß ist die Vorrichtung dadurch gekennzeichnet, dass die Schaltung eine Übertragungseinrichtung umfasst, die dazu ausgebildet ist, eine Verbindung mit einer zentralen Meldestelle herzustellen.

Die Erfindung umfasst auch eine vereinfachte Ausführung, bei der z. B. bei einem Wasserversorgungsleitungssystem, zu bestimmten Zeitpunkten, beispielsweise in zehnminütigen Abständen, nur geprüft wird, ob Wasserdurchfluss bzw. ob Wasserdurchfluss oberhalb eines bestimmten Grenzwertes vorliegt oder nicht. In einem Speicher wird dann eine Binärsignal abgelegt, das anzeigt, wann ein von Null verschiedener Verbrauch bzw. ein Verbrauch oberhalb eines bestimmten Grenzwertes vorliegt und wann nicht. Dann wird überprüft, ob während eines vorbestimmten Beobachtungszeitraumes von beispielsweise 24 Stunden mindestens einmal Nullverbrauch, bzw. ein Verbrauch nicht oberhalb eines bestimmten Grenzwertes festgestellt wurde. Wenn diese Frage zu verneinen ist, dann liegt eine Undichtheit und/oder missbräuchliche Nutzung vor. Diese Methode erscheint auch bei manchen Entsorgungsleitungen zur Überprüfung der Dichtheit (z. B. bei Rauchfängen) oder zur Überprüfung der Bestimmungsgemäßheit der Nutzung (z. B. bei Rauchfängen, Kanälen und Müllschluckern) angebracht.

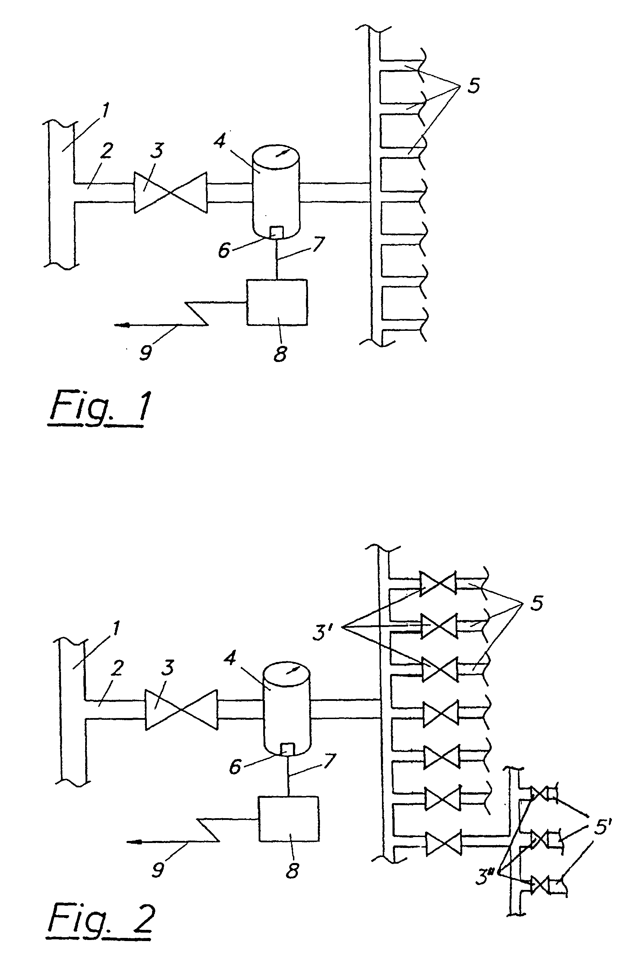

Die Erfindung wird anhand der Figuren näher erläutert. Es zeigen die Fig. 1 und 2 schematisch erfindungsgemäße Vorrichtungen zur Überprüfung von Leitungssystemen in zwei verschiedenen Ausführungsvarianten.

An einer Hauptleitung 1 zweigt eine Versorgungsleitung 2 ab, die beispielsweise ein Wohnhaus mit Wasser versorgt. In dieser Versorgungsleitung 2 ist ein Absperrventil 3 und ein Wasserzähler 4 vorgesehen. Nach dem Wasserzähler 4 verzweigt sich die Versorgungsleitung 2 in eine Mehrzahl von Zweigleitungen 5 zu den einzelnen Verbrauchern.

Am Wasserzähler 4 ist ein Sensor 6 angebracht, der erfassen kann, ob sich der Wasserzähler bewegt, d.h., ob zu einem bestimmten Zeitpunkt ein Durchfluss vorliegt oder nicht. Der Sensor 6 ist über eine Leitung 7 mit einer Schaltung 8 verbunden, die über eine Übertragungseinrichtung 9 mit einer nicht dargestellten Meldestelle in Verbindung steht. Bei der Übertragungseinrichtung 9 kann es sich um eine Fernsprechwählleitung, eine Fernsprechstandleitung oder eine Funkverbindung, insbesondere eine Mobiltelefonverbindung, handeln.

Die Schaltung 8 ist so programmiert, dass zu festgesetzten Zeitpunkten, etwa alle zehn Minuten, der momentane Durchfluss erfasst wird. Dieser Verbrauch wird in einem Speicher abgelegt, wobei es genügt, nur ein Binärsignal zu speichern, das anzeigt, ob ein von null verschiedener Verbrauch oder ein Verbrauch unterhalb eines bestimmten Grenzwertes vorliegt oder nicht. Dann wird überprüft, ob innerhalb eines vorbestimmten Beobachtungszeitraums von beispielsweise 24 Stunden mindestens einmal festgestellt worden ist, dass kein Verbrauch bzw. ein Verbrauch nicht oberhalb eines bestimmten Grenzwertes vorliegt. Wenn diese Frage mit ja beantwortet werden kann, so liegt keine Störung vor. Im anderen Fall wird über die Telefonleitung 9 eine Störungsmeldung abgesetzt.

Die in der Fig. 2 dargestellte Ausführung unterscheidet sich von Fig. 1 dadurch, dass in jeder Zweigleitung 5 ein Absperrorgan 3' angeordnet ist. Jedes Absperrorgan 3' steht mit der Schaltung 8 in Verbindung. Bei Eingehen einer Störmeldung wird abwechselnd jedes Absperrorgan 3' geschlossen, um die Störung zu lokalisieren. Sobald die Zweigleitung 5 mit der Störstelle geschlossen ist, normalisiert sich der gemessene Durchfluss, so dass der Störungsbereich rasch eingegrenzt werden kann. Störungsfreie Leitungssystemteile werden in ihrem Betrieb nicht weiter gestört.

Verzweigt sich die Zweigleitung 5 in weiteren Unterzweigleitungen 5', so können in jeder Unterzweigleitung 5' weitere Absperrorgane 3" angeordnet sein, welche in der beschriebenen Weise durch die Schaltung 8 betätigt werden können. Dadurch kann einerseits der Störbereich weiter eingegrenzt werden und andererseits die Betriebsstörungen von ungestörten Leitungssystemteilen so klein wie möglich gehalten werden.

Um echte Leitungsschäden von kurzzeitigen erhöhtem Wasserverbrauch zu unterscheiden, können die Absperrorgane 3, 3', 3" nach einer festgelegten Zeitdauer wieder geöffnet werden. Ist die Störung nun behoben, so sind keine weiteren Maßnahmen erforderlich. Bei Fortdauer der Störung kann gegebenenfalls automatisch eine Behebung bzw. Reparatur veranlasst werden.

Zusammenfassend sind folgende Varianten der Erfindung realisierbar, wobei die einzelnen Alternativen in sinnvoller Weise auch untereinander kombinierbar sind:

Die erfindungsgemäße Vorrichtung ist als eigenständiges Gerät konzipierbar, das nur zur Leitungsüberprüfung dient. Alternativ dazu kann jedoch auch eine Integration mit einem herkömmlichen Wasserzähler od. dgl. und/oder einem Absperrorgan vorliegen.

Die Messergebnisse der einzelnen Verbrauchsmessungen können zentral in einer entsprechenden Meldestelle verarbeitet werden. Es ist jedoch auch eine dezentrale Verarbeitung im Gerät selbst oder im Bereich des Gerätes möglich. In Sonderfällen kann auf eine Weiterverarbeitung der Messergebnisse auch verzichtet werden.

Bei den letzteren beiden Varianten kann eine entsprechende Meldung an Ort und Stelle vorgesehen sein, während bei allen Varianten eine entsprechende Meldungsübermittlung an eine zentrale Überwachungsstelle möglich ist.

Die Energieversorgung kann über eine Stromleitung erfolgen, es ist jedoch auch die Verwendung einer Batterie möglich. Gegebenenfalls kann die erfindungsgemäße Vorrichtung aus einer durch das Leitungssystem betriebenen Turbine erfolgen, die mit einem Akkumulator od. dgl. in Verbindung steht.

Die allfällige Verbindung mit einer zentralen Meldestelle kann über eine Telefonleitung erfolgen, die als Standleitung oder Wählleitung ausgebildet sein kann. Es ist jedoch auch eine Mobiltelefonverbindung oder eine Funkverbindung möglich.

Die vorliegende Erfindung ermöglicht mit geringem Aufwand eine genaue und zuverlässige Überwachung einer großen Anzahl von Verbrauchern.

## Patentansprüche

1. Verfahren zur Überprüfung von Leitungssystemen, insbesondere von Wasserversorgungsleitungssystemen, bei dem zu vorbestimmten Zeitpunkten der momentane Durchfluss wiederholt erfasst wird, wobei die Beurteilung des Systems in Abhängigkeit davon durchgeführt wird, ob der momentane Durchfluss unterhalb eines vorbestimmten Grenzwerts liegt oder nicht, **dadurch gekennzeichnete, dass** die Beurteilung des Systems in Abhängigkeit davon durchgeführt wird, ob innerhalb eines vorbestimmten Beobachtungszeitraumes mindestens ein Messwert vorliegt, der einen Durchfluss nicht oberhalb eines vorbestimmten Grenzwerts zeigt, der im Rahmen der Messgenauigkeit mit null festgesetzt wird, indem eine Vielzahl von Messwerten gespeichert wird, die zu einem Beobachtungszeitraum gehören, und danach überprüft wird, ob mindestens ein Messwert vorliegt, der einen Durchfluss nicht oberhalb des vorbestimmten Grenzwerts zeigt, und dass dann, wenn ein solcher Messwert nicht vorliegt, eine Störungsmeldung über eine Übertragungseinrichtung an eine zentrale Meldestelle weitergegeben wird.

2. Verfahren nach Anspruch 1, **dadurch gekennzeichnet, dass** der Beobachtungszeitraum mit etwa 24 Stunden festgelegt wird.

3. Verfahren nach einem der Ansprüche 1 oder 2, **dadurch gekennzeichnet, dass** der zeitliche Abstand zwischen den Zeitpunkten, an denen Messungen durchgeführt werden, kleiner ist als 30 Minuten.

4. Verfahren nach einem der Ansprüche 1 bis 3, **dadurch gekennzeichnet, dass** die Erfassung des Durchflusses und die Beurteilung des Systems in einer Überprüfungseinrichtung beim Verbraucher durchgeführt wird.

5. Verfahren nach einem der Ansprüche 1 bis 3, **dadurch gekennzeichnet, dass** nur die Erfassung des jeweiligen Durchflusses am Ort des Verbrauchers durchgeführt wird, und dass die erfassten Messwerte zur Weiterverarbeitung und Durchführung der Überprüfung über die Übertragungseinrichtung zu der zentralen Meldestelle weitergegeben werden.

6. Verfahren nach einem der Ansprüche 1 bis 5, **dadurch gekennzeichnet, dass** die Übertragungseinrichtung als Fernsprechwählleitung, als Fernsprechstandleitung oder als Funkverbindung, vorzugsweise als Mobiltelefonverbindung ausgebildet ist.

7. Verfahren nach einem der Ansprüche 1 bis 6, **dadurch gekennzeichnet, dass** die Größe der Störung ermittelt wird und ab einer vordefinierten Abweichung vom Normalzustand ein Absperrorgan stromaufwärts der Störstelle geschlossen wird.

8. Verfahren nach einem der Ansprüche 1 bis 7, **dadurch gekennzeichnet, dass** ab einer vordefinierten Abweichung vom Normalzustand abwechselnd Absperrorgane in der Versorgungsleitung nachfolgenden Zweigleitungen geschlossen werden.

9. Verfahren nach einem der Ansprüche 1 bis 8, **dadurch gekennzeichnet, dass** das zumindest eine geschlossene Absperrorgan nach einer vordefinierten Zeitdauer wieder geöffnet und eine erneute Messung durchgeführt wird.

10. Vorrichtung zur Überprüfung von Leitungssystemen, insbesondere von Wasserversorgungsleitungssystemen, mit einem Sensor (6), der dazu ausgebildet ist, den augenblicklichen Durchfluss zu erfassen, wobei der Sensor (6) mit einer Schaltung (8) verbunden ist, um aus den vom Sensor (6) erfassten Daten eine Beurteilung zu treffen, ob eine Störung vorliegt, **dadurch gekennzeichnet, dass** die Schaltung (8) dazu ausgebildet ist, innerhalb vorbestimmter Beobachtungszeiträume eine Vielzahl von Messungen vorzunehmen, die zu einem Beobachtungszeitraum gehören, die Messwerte zu speichern und danach zu überprüfen, ob mindestens ein Messwert innerhalb des Beobachtungszeitraums vorliegt, der einen Durchfluss nicht oberhalb des vorbestimmten Grenzwerts zeigt, und dass die Schaltung (8) eine Übertragungseinrichtung (9) umfasst, die dazu ausgebildet ist, eine Verbindung mit einer zentralen Meldestelle herzustellen.

11. Vorrichtung nach Anspruch 10, **dadurch gekennzeichnet, dass** zumindest ein Absperrorgan (3, 3', 3") zur händischen oder automatischen Absperrung in einer Versorgungsleitung (2) angeordnet ist.

12. Vorrichtung nach Anspruch 11 mit mehreren von der Versorgungsleitung (2) abzweigenden und zu einzelnen Verbrauchern führenden Zweigleitungen (5), **dadurch gekennzeichnet, dass** in jeder Zweigleitung (5) ein Absperrorgan (3') angeordnet ist.

## Claims

1. A method for checking conduit systems, especially conduit systems for water supply, in which the momentary flow rate is detected repeatedly at predetermined times, with the evaluation of the system being performed depending on whether or not the momentary flow rate is situated below a predetermined limit value, **characterized in that** the evaluation of the system is performed depending on whether at least one measured value is present within a predetermined monitoring period which shows a flow rate not above a predetermined limit value which is fixed at zero within the scope of the measuring accuracy by storing a plurality of measured values which belong to a monitoring period and checking thereafter whether there is at least one measured value which shows a flow rate not above the predetermined limit value, and that thereafter, if such a measured value is not present, a fault indication is sent via a transmission device to a central reporting unit.

2. A method as claimed in claim 1, **characterized in that** the monitoring period is determined with approx. 24 hours.

3. A method as claimed in one of the claims 1 or 2, **characterized in that** the temporal distance between the points in time at which measurements are made is smaller than 30 minutes.

4. A method as claimed in one of the claims 1 to 3, **characterized in that** the detection of the flow rate and the evaluation of the system is carried out in a checking device at the consumer's place.

5. A method as claimed in one of the claims 1 to 3, **characterized in that** only the detection of the respective flow rate is carried out at the consumer's place and that the detected measured values are sent for further processing and performing the check via the transmission device to the central reporting unit.

6. A method as claimed in one of the claims 1 to 5, **characterized in that** the transmission device is configured as a dial-up telephone line, dedicated telephone line or radio link, preferably as a mobile phone link.

7. A method as claimed in one of the claims 1 to 6, **characterized in that** the magnitude of the fault is determined and a shutoff member is closed upstream of the fault location from a predetermined deviation from the normal state.

8. A method as claimed in one of the claims 1 to 7, **characterized in that** from a predetermined deviation from the normal state shutoff members are closed alternatingly in the supply conduit of subsequent branch conduits.

9. A method as claimed in one of the claims 1 to 8, **characterized in that** the at least one closed shutoff member is opened again after a predetermined period of time and a renewed measurement is performed.

10. An apparatus for checking conduit systems, especially conduit systems for water supply, with a sensor (6) which is arranged to detect the momentary flow rate, with the sensor (6) being connected with a circuit (8) in order to make an evaluation from the data detected by the sensor (6) whether there is a fault, **characterized in that** the circuit (8) is arranged to carry out within predetermined monitoring periods a plurality of measurements which belong to a monitoring period, to store the measured values and to verify thereafter whether at least one measured value is present within the monitoring period which shows a flow rate not above a predetermined limit value, and that the circuit (8) comprises a transmission device (9) which is configured to produce a link to a central reporting unit.

11. An apparatus as claimed in claim 10, **characterized in that** at least one shutoff member (3, 3', 3") is disposed in a supply conduit (2) for manual or automatic shutoff.

12. An apparatus as claimed in claim 11 with several branch conduits (5) branching off from the supply conduit (2) and leading to individual consumers, **characterized in that** a shutoff member (3') is disposed in each branch conduit (5).

## Revendications

1. Procédé pour la supervision de systèmes de canalisations, notamment de systèmes de canalisations de distribution d'eau, dans le cas duquel l'écoulement instantané de l'eau est acquis de manière répétée à intervalles préétablis, l'évaluation du système étant réalisée en fonction du fait de savoir si l'écoulement instantané de l'eau est ou non situé en dessous d'une valeur limite prédéfinie, **caractérisé en ce que** le système d'évaluation s'effectue en fonction du fait de savoir si au moins une valeur mesurée existe à l'intérieur d'un laps de temps d'observation prédéfini, cette valeur indique un écoulement d'eau sans dépassement d'une valeur limite prédéfinie, fixée à zéro dans le cadre de la précision des mesures, en mémorisant une multitude de valeurs mesurées qui appartiennent à un laps de temps d'observation, et qui est ensuite contrôlé pour savoir s'il existe au moins une valeur mesurée, qui indique un écoulement d'eau inférieur à la valeur limite prédéfinie, et **en ce que** par suite, lorsqu'une telle valeur mesurée n'existe pas, un signal de dysfonctionnement est transmis à un centre de surveillance à l'aide d'un dispositif de transmission.

2. Procédé selon la revendication 1, **caractérisé en ce que** le laps de temps d'observation est fixé à environ 24 heures.

3. Procédé selon l'une quelconque des revendications 1 ou 2, **caractérisé en ce que** le positionnement des points pour lesquels sont effectuées les mesures s'insère dans un laps de temps de 30 minutes.

4. Procédé selon l'une quelconque des revendications 1 à 3, **caractérisé en ce que** l'acquisition de l'écoulement de l'eau et l'évaluation du système sont réalisées dans un dispositif de supervision chez le consommateur.

5. Procédé selon l'une quelconque des revendications 1 à 3, **caractérisé en ce que** seule l'acquisition de l'écoulement de l'eau respectif est réalisé sur le site du consommateur, et **en ce que** les acquisitions de valeurs mesurées sont transmises au centre de surveillance à l'aide du dispositif de transmission pour traitement ultérieur et exécution du contrôle.

6. Procédé selon l'une quelconque des revendications 1 à 5, **caractérisé en ce que** le dispositif de transmission est formé par une ligne téléphonique automatique, liaison téléphonique louée (fixe) ou par une liaison radio, de préférence par une liaison de téléphone mobile.

7. Procédé selon l'une quelconque des revendications 1 à 6, **caractérisé en ce qu**'à partir d'une divergence par rapport à l'état normal prédéfini, la taille du dérangement est déterminée et qu'une vanne d'arrêt est fermée en amont du point de perturbation.

8. Procédé selon l'une quelconque des revendications 1 à 7, **caractérisé en ce qu'**une divergence par rapport à l'état normal prédéfini, des vannes d'arrêt dans la conduite de distribution sont alternativement fermées à partir des branchements placés en aval.

9. Procédé selon l'une quelconque des revendications 1 à 8, **caractérisé en ce qu'**au moins l'une des vannes d'arrêt fermée est de nouveau ouverte après une durée prédéfinie et qu'une nouvelle mesure est réalisée.

10. Dispositif pour la supervision de systèmes de canalisations, notamment de systèmes de canalisations de distribution d'eau, avec un capteur (6) conçu pour détecter l'écoulement instantané de l'eau, le capteur (6) étant raccordé à un montage (8) pour effectuer une évaluation à partir des données acquises par le capteur (6) afin de savoir s'il y a un dysfonctionnement, **caractérisé en ce que** le montage (8) est conçu pour réaliser, dans un laps de temps prédéfini, une multitude de mesures appartenant à un laps de temps d'observation, pour mémoriser les valeurs mesurées et vérifier ensuite s'il existe au moins une valeur mesurée indiquant un écoulement ne dépassant pas la valeur limite prédéfinie, dans le laps de temps d'observation, et **en ce que** le montage (8) comprend un dispositif de transmission (9) conçu pour réaliser une liaison avec un centre de supervision.

11. Dispositif selon la revendication 10, **caractérisé en ce qu'**au moins une vanne d'arrêt (3, 3', 3'') est positionnée dans une conduite de distribution (2) pour l'arrêt manuel ou automatique.

12. Dispositif selon la revendication 11 avec plusieurs branchements (5) dérivés de la conduite de distribution aboutissent à des consommateurs individuels, **caractérisé en ce qu'**une vanne d'arrêt (3') est positionnée à chaque conduite de distribution (5).
